# EUROPEAN PATENT SPECIFICATION

(11) **EP 2 696 047 B1**
(45) Date of publication and mention of the grant of the patent: **01.08.2018**
(21) Application number: 12768331.6
(22) Date of filing: 05.04.2012
(51) Int. Cl.: F01N 3/10, B01D 53/94, B01J 27/055, B01J 27/18, F01N 3/023, F01N 3/035, F01N 3/24, F02D 41/04, B01J 23/66, B01J 35/04, B01J 37/02, B01J 35/00, B01J 35/02, B01J 35/10

(54) **EXHAUST GAS PURIFICATION DEVICE, AND EXHAUST GAS PURIFICATION METHOD USING SAME**
ABGASREINIGUNGSVORRICHTUNG UND ABGASREINIGUNGSVERFAHREN DAMIT
DISPOSITIF DE PURIFICATION DE GAZ D'ÉCHAPPEMENT ET SON PROCÉDÉ D'UTILISATION

(30) Priority: 08.04.2011 JP 2011086450
(43) Date of publication of application: 12.02.2014
(73) Proprietor: TOYOTA JIDOSHA KABUSHIKI KAISHA, Toyota-shi, Aichi-ken, 471-8571 (JP)
(72) Inventor: YAMAZAKI, Kiyoshi, Nagakute-shi, Aichi 480-1192 (JP); SAKAKIBARA, Yuji, Nagakute-shi, Aichi 480-1192 (JP); OKAWARA, Seiji, Toyota-shi, Aichi-ken 471-8571 (JP)
(74) Representative: J A Kemp
(86) International application number: PCT/JP2012/059309
(87) International publication number: WO 2012/137857

(56) References cited:
- JP-A- 6 055 075
- JP-A- 2003 170 051
- JP-A- 2004 324 505
- JP-A- 2004 337 681
- JP-A- 2006 283 748
- JP-A- 2009 299 521
- JP-A- 2012 086 187
- KR-A- 20090 056 021
- US-A1- 2004 018 939

## Description

### TECHNICAL FIELD

The present invention relates to an exhaust gas purification device and an exhaust gas purification method using same.

### BACKGROUND ART

Gas discharged from an internal combustion engine includes hazardous substances such as particulate matter (PM) generated by combustion and ash constituted by additives contained in oil. Among those hazardous substances, particulate matter is well known to be an atmospheric pollutant adversely affecting animals and plants. Accordingly, the use of oxidation catalysts for purifying the particulate matter discharged from internal combustion engines has been investigated.

For example, WO 2007/043442 (Patent Document 1) discloses an oxidation catalyst constituted by a support constituted by a composite oxide of cerium and zirconium and Ag or Ag oxide supported on the support. Japanese Patent Application Publication No. 2010-264359 (JP 2010-264359 A) (Patent Document 2) discloses an oxidation catalyst including a composite oxide (CeZrO₂ is used in all of the examples) having oxygen release capacity and including at least two or more elements selected from the group consisting of alkaline earth metal elements, transmission metal elements, elements of group 12 of the periodic table of the elements, and elements of group 13 of the periodic table of the elements, and Ag supported on the composite oxide. Further, Japanese Patent Application Publication No. 2007-196135 (JP 2007-196135 A) (Patent Document 3) discloses using an oxidation catalyst obtained by calcining silver-supporting boehmite. Japanese Patent Application Publication No. 2010-75797 (JP 2010-75797 A) (Patent Document 4) discloses an oxidation catalyst in which Ag is supported on TiO₂. However, in the conventional oxidation catalysts such as described in Patent Documents 1 to 4, when ash contained in the gas is deposited on the oxidation catalyst as the catalyst is used, the ash inhibits the contact between the particulate matter and the oxidation catalyst and reduces the particulate matter purification capacity of the oxidation catalyst. Further, in order to regenerate the oxidation catalyst in which the particulate matter purification capacity has thus been decreased, the exhaust gas should be heated to a high temperature, and a large amount of fuel is consumed on the regeneration of the purification capacity of the catalyst. Therefore, the problem arising when the conventional oxidation catalysts such as described in Patent Documents 1 to 4 are used is that the fuel efficiency of the internal combustion engine is decreased. Further, with the conventional oxidation catalysts such as described in Patent Documents 1 to 4, since the particulate matter purification capacity changes, as described hereinabove, as the catalysts are used, the period for performing the regeneration of the purification capacity of the catalyst and the temperature conditions for the regeneration treatment are difficult to set, and when the catalyst is supported on a base material such as a particulate filter, the base material can be fractured by the heat caused by oxidation of a large amount of particulate matter. Thus, in the conventional oxidation catalysts such as described in Patent Documents 1 to 4, sufficient purification capacity cannot be demonstrated due to the deposition of ash.

Meanwhile, Japanese Patent Application Publication No. 2008-309160 (JP 2008-309160 A) (Patent Document 5) discloses a structure in which, in order to prevent the deposition of ash on a catalyst, a filter for supporting an oxidation catalyst is configured as a molded body obtained by using a pair of a porous corrugated sheet and a porous flat sheet as a basic unit and stacking the basic units so that ridge lines of the corrugated sheets are alternately orthogonal to each other, the exhaust gas is caused to flow in from one direction of the ridge lines of the corrugated sheets, means for blocking the passage of the exhaust gas is provided at a surface on the side opposite that of the surface where the exhaust gas flows in, or at one of the side surfaces orthogonal to the inflow direction of the exhaust gas, and the means for blocking the passage of the exhaust gas can be switched between the state in which the exhaust gas passes through and the state in which it is blocked. Japanese Patent Application Publication No. 2008-088903 (JP 2008-088903 A) (Patent Document 6) discloses a structure in which a filter supporting an oxidation catalyst is configured by arranging a plurality of cells extending in the exhaust gas flow direction so that the cells are parallel to each other, and a plug plate that can close alternately the outlet-side openings of the adjacent cells, thereby forming cells with closed outlet-side openings and cells with open outlet-side openings, is provided to be capable of coming into contact with and separating from the downstream end face of the exhaust gas flow channel. Such techniques described in Patent Documents 5 and 6 prevent the deposition of ash on the catalyst by controlling the opening and closing of the open sections of the filter. However, even with the filters such as described in Patent Documents 5 and 6, ash cannot be entirely removed, and part of the ash strongly adheres to the partitions of the filter or the surface of the oxidation catalyst. Therefore, the decrease in particulate matter purification capacity caused by the deposition of ash cannot be sufficiently prevented. Further, the exhaust gas purification devices equipped with the filters described in Patent Documents 5 and 6 are not sufficient in terms of cost efficiency (cost) and presently have not found practical use.

JP 2003-170051 discloses a gas purification device comprising a particle filter (DPF) coated with a catalyst for burning particulate matter, said catalyst being formed by supporting an active element on a hydroxide, oxide, carbonate, or sulfate of an alkaline earth metal. In an example, silver nitrate is added to calcium oxide, dried, and calcined.

Patent Document 1: WO 2007/043442
Patent Document 2: Japanese Patent Application Publication No. 2010-264359
Patent Document 3: Japanese Patent Application Publication No. 2007-196135
Patent Document 4: Japanese Patent Application Publication No. 2010-75797
Patent Document 5: Japanese Patent Application Publication No. 2008-309160
Patent Document 6: Japanese Patent Application Publication No. 2008-088903

### SUMMARY OF THE INVENTION

The present invention has been created with consideration for the above-described problems inherent to the related art, and it is an objective of the present invention to provide an exhaust gas purification device in which the decrease in particulate matter oxidation capacity caused by the deposition of ash is sufficiently inhibited and sufficiently high particulate matter oxidation capacity can be demonstrated even after the deposition of ash, and also to provide an exhaust gas purification method using the exhaust gas purification device.

The inventors have conducted a comprehensive study to attain the abovementioned objective. The results obtained have demonstrated that in an exhaust gas purification device provided with an oxidation catalyst for oxidizing and purifying the particulate matter contained in the exhaust gas from an internal combustion engine, the decrease in oxidation capacity caused by the deposition of ash can be sufficiently inhibited and sufficiently high particulate matter oxidation capacity can be demonstrated even after the deposition of ash by providing the oxidation catalyst with a support constituted by at least one metal salt selected from the group consisting of Ca sulfate and phosphate, and a silver-containing substance supported on the support. This finding led to the creation of the present invention.

Thus, the exhaust gas purification device in accordance with the present invention is provided with an oxidation catalyst for oxidizing and purifying particulate matter contained in exhaust gas from an internal combustion engine, the exhaust gas including ash, wherein the oxidation catalyst is provided with a support constituted by Ca sulfate, and silver sulfate supported on the support.

In the exhaust gas purification device in accordance with the present invention, the oxidation catalyst is formed such that the catalyst provided with the support and the silver sulfate is supported on a particulate filter (DPF), wherein the supported amount of silver sulfate per 1 L of the particulate filter volume is 10.8 g/L; the supported amount of silver sulfate expressed in terms of metallic silver per 100 parts by mass of the Ca sulfate is 11.11 parts by mass; and the thickness of the oxidation catalyst layer is 2 µm.

The exhaust gas purification device in accordance with the present invention is preferably further provided with first control means for performing control such that a step of bringing exhaust gas, in which an air-fuel ratio is lean, into contact with the oxidation catalyst and a step of bringing exhaust gas, in which the air-fuel ratio is rich, into contact with the oxidation catalyst are implemented alternately.

The exhaust gas purification device in accordance with the present invention is preferably further provided with ash deposition amount estimation means for estimating an amount of ash contained in the exhaust gas that has been deposited on the oxidation catalyst, and when the ash deposition amount estimation means is provided, it is preferred that second control means be further provided for performing control such that a step of bringing exhaust gas in which the air-fuel ratio is rich into contact with the oxidation catalyst is implemented when the deposition amount of ash estimated by the ash deposition amount estimation means exceeds a reference value.

The exhaust gas purification method in accordance with the present invention uses an exhaust gas purification device including an oxidation catalyst for oxidizing and purifying particulate matter contained in exhaust gas from an internal combustion engine to bring the exhaust gas into contact with the oxidation catalyst, thereby purifying the particulate matter, the exhaust gas including ash, wherein the oxidation catalyst is provided with a support constituted by Ca sulfate, and silver sulfate supported on the support, and the oxidation catalyst is formed such that a catalyst provided with the support and the silver-containing substance is supported as a layer on a particulate filter (DPF); wherein the supported amount of silver sulfate per 1 L of the particulate filter volume is 10.8 g/L; the supported amount of silver sulfate expressed in terms of metallic silver per 100 parts by mass of the Ca sulfate is 11.11 parts by mass; and the thickness of the oxidation catalyst layer is 2 µm.

Further, in the exhaust gas purification method in accordance with the present invention, a step of bringing exhaust gas, in which an air-fuel ratio is lean, into contact with the oxidation catalyst and a step of bringing exhaust gas, in which the air-fuel ratio is rich, into contact with the oxidation catalyst are preferably implemented alternately.

Further, in the exhaust gas purification method in accordance with the present invention, it is preferred that the exhaust gas purification device further include ash deposition amount estimation means for estimating an amount of ash contained in the exhaust gas that has been deposited on the oxidation catalyst; and
a step of bringing exhaust gas, in which the air-fuel ratio is rich, into contact with the oxidation catalyst be implemented when the deposition amount of ash estimated by the ash deposition amount estimation means exceeds a reference value.

The reasons why the decrease in particulate matter oxidation capacity caused by ash deposition is sufficiently inhibited and sufficiently high particulate matter oxidation capacity can be demonstrated even after the ash deposition by using the exhaust gas purification device and exhaust gas purification method in accordance with the present invention are not necessarily clear, but the inventors infer the following.

The exhaust gas purification device in accordance with the present invention uses an oxidation catalyst in which a silver-containing substance is supported on a support. The oxidation of PM in the case where the silver-containing substance is used is examined hereinbelow. Such a silver-containing substance includes the Ag element. Further, where the silver-containing substance is used, when the exhaust gas from the internal combustion engine has a high temperature and includes water vapors (in the presence of high-temperature water vapors) under usual usage conditions, the Ag element can be dissociated from the silver-containing substance and Ag ion (Ag⁺) can be generated. The case in which silver sulfate (AgSO₄), which is the silver-containing substance in accordance with the present invention, is used will be explained below by way of example. In this case, the Ag ion and sulfuric acid ion (SO₄²⁻) are dissociated in the presence of high-temperature water vapors, thereby generating the Ag ion. The Ag ion thus generated is reduced by contact with carbon (C), which is the main component of particulate matter (PM), thereby producing Ag in a metallic state, and the PM that has come into contact with the Ag ion is oxidized. Such PM oxidation reaction converts the Ag ion into Ag (metal), but such Ag (metal) is again converted into the Ag ion by contact with oxygen present in the exhaust gas with a lean air-fuel ratio (lean-atmosphere exhaust gas), and an oxygen ion (O²⁻) is generated from the oxygen. A series of reactions proceeding in such PM oxidation treatment (PM oxidation treatment 1) can be represented by the following reaction equations (1) and (2).

(1) 4Ag⁺ + C + 2O²⁻ → 4Ag + CO₂

(2) 4Ag + O₂ → 4Ag⁺ + 2O²⁻

(concerning those reactions proceeding in such PM oxidation treatment 1, where silver (metal) is used alone as the silver-containing substance, the Ag ion is formed and the reaction advances according to the reaction equation (2) under a high-temperature lean atmosphere, and the PM is removed).

Further, in the oxidation catalyst, the silver-containing substance, which is silver sulfate, is supported on a support. When the silver-containing substance is thus used in combination with the support, where melting of the silver-containing substance is induced, the Ag ions generated from the silver-containing substance diffuse to cover the entire surface of the support. For example, since the silver-containing substance is Ag₂SO₄, the melting point thereof is 660°C and part thereof apparently melts in a temperature range in which the PM is oxidized. Therefore, in the oxidation catalyst provided with the silver-containing substance supported on a support, the number of contact point of Ag ions and PM is greatly increased and an extremely high PM oxidation activity can be obtained. Further, where such an oxidation catalyst is exposed to exhaust gas with a rich air-fuel ratio (rich-atmosphere exhaust gas), the silver-containing substance reacts with a reducing gas (for example, H₂) and Ag in a metallic state is generated on the support. Where oxygen (O₂) in a gaseous state comes into contact with the Ag in the metallic state that has thus been generated, Ag₂O is produced, and where PM comes into contact with the Ag₂O, the PM is oxidized (PM oxidation treatment 2). The case in which silver sulfate (Ag₂SO₄) is used will be explained below by way of example. In this case, a series of reactions proceeding in such PM oxidation treatment 2 can be represented by the following reaction equations (3) to (5).

(3) Ag₂SO₄ + 2H₂ → 2Ag + 2H₂O + SO₂

(4) 4Ag + O₂ → 2Ag₂O

(5) 2Ag₂O + C (PM) → 4Ag + CO₂

(concerning such PM oxidation treatment 2, where Ag (metal) is used alone as the silver-containing substance, the PM is removed by the reactions represented by reaction equations (4) and (5)).

Comparing those PM oxidation treatments 1 and 2, the PM oxidation activity is higher when the PM is oxidized by using the PM oxidation treatment 2. Therefore, the inventors infer that when the silver-containing substance is used, an oxidation catalyst supported on a support is obtained, Ag contained in the catalyst is converted into the metallic state by implementing a control step such that the oxidation catalyst comes into contact with the rich-atmosphere exhaust gas, and then the lean-atmosphere exhaust gas is brought into contact, thereby making it possible to obtain higher PM oxidation activity.

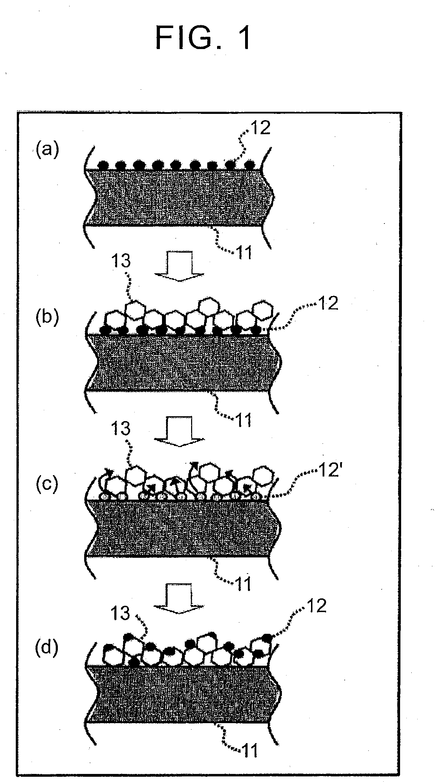

Exhaust gas purification steps will be examined below with reference to FIG. 1. First, the conventional exhaust gas purification device will be examined. Where exhaust gas is brought into contact with the oxidation catalyst in the exhaust gas purification device, since the exhaust gas also includes ash (unburned matter), which is generated from additives contained in the engine oil, in addition to PM, PM and ash 13 are deposited together on the catalyst including a support 11 and a silver-containing substance 12 (a concept inclusive of metallic silver). As the deposition of the ash 13 on the oxidation catalyst advances, a layer of deposited ash 13 is formed, contact between the PM and active centers (for example, silver ions or silver oxide) in the oxidation catalyst is inhibited, and the PM oxidation activity of the oxidation catalyst is degraded. Thus, where the conventional oxidation catalyst is used, since the deposited ash impedes the contact between the PM and the active centers (for example, silver ions or silver oxide) in the oxidation catalyst, the reactions shown in the PM oxidation treatments 1 and 2 such as described hereinabove cannot be sufficiently induced.

By contrast, in the oxidation catalyst in accordance with the present invention, a metal salt which is Ca sulfate is used as the support 11, and the silver-containing substance 12 is supported on the support 11. Since the metal salt used for support is a component contained in the ash, the metal salt has properties very close to those of the ash. For this reason, even when the ash 13 is deposited on the catalyst, as shown in FIG. 1B, a movable silver compound (a concept inclusive of Ag⁺ ion) 12' is generated from the silver-containing substance 12 due to dissociation in the presence of high-temperature water vapors or melting at a high temperature, and the movable silver compound 12' can be moved from the support 11 to the surface (surface that can come into contact with the exhaust gas) of the ash 13 (FIG. 1C). The inventors infer that the movable silver compound 12' that has moved to the surface of the ash 13 then comes into contact with the PM on the surface of the ash 13 and can induce the reactions (reaction equations (1) and (2)) shown in the PM oxidation treatment 1 such as described hereinabove.

Further, where the oxidation catalyst with the ash 13 deposited thereon is brought into contact with the lean-atmosphere exhaust gas, the silver-containing substance 12 receives sulfuric acid ions (SO₄²⁻) from calcium sulfate contained in the ash 13, and the movable silver compound 12' (in this case, Ag₂SO₄) is formed (FIGS. 1B and 1C). Since the Ag₂SO₄ has a melting point of 660°C and part thereof is melted in a temperature range in which the PM is oxidized, it is a compound that has high mobility from the support 11 to the surface of the ash 13 and easily moves to the surface (surface that can come into contact with the exhaust gas) of the ash 13. Where the rich-atmosphere exhaust gas is thereafter brought into contact, metallic silver (silver-containing substance 12) is precipitated on the surface of the ash 13 because of the movable silver compound 12' that has moved to the surface (FIG. ID). The inventors infer that after such a precipitation of metallic silver (silver-containing substance 12), the PM can be oxidized by the reactions represented by the reaction equations (4) and (5) hereinabove and a higher PM oxidation capacity can be obtained.

As described hereinabove, in the oxidation catalyst in accordance with the present invention, even when the ash 13 is deposited, the silver-containing substance 12 can move onto the surface of the ash 13, and the decrease in the number of contact points between the PM and the silver-containing substance 12 can be sufficiently inhibited. In other words, in the oxidation catalyst in accordance with the present invention, the deposited ash itself is used as the support for the catalyst (silver-containing substance 12) and the decrease in catalytic activity can be inhibited. The inventors infer that for this reason in the present invention, sufficiently high particulate matter oxidation capacity can be demonstrated even after the deposition of the ash 13. Further, when the amount of ash deposited on such an oxidation catalyst exceeds a reference value (threshold), the PM can be still oxidized by the reactions represented by reaction equations (4) and (5), with Ag being in the metallic state on the ash surface, by implementing a step of bringing into contact with the rich-atmosphere exhaust gas. The inventors infer that for this reason, a higher oxidation activity can still be demonstrated by implementing the step of bringing into contact with the rich-atmosphere exhaust gas when the amount of ash deposited on the oxidation catalyst has exceeded the reference value.

In accordance with the present invention, it is possible to provide an exhaust gas purification device in which the decrease in particulate matter oxidation capacity caused by the deposition of ash can be sufficiently inhibited and sufficiently high particulate matter oxidation capacity can be demonstrated even after the deposition of ash, and also to provide an exhaust gas purification method using the exhaust gas purification apparatus.

### BRIEF DESCRIPTION OF THE DRAWINGS

[FIG. 1] FIG. 1 is a schematic view illustrating how the state of the oxidation catalyst changes with the time of use; FIG. 1(a) is a schematic view illustrating conceptually the state of the oxidation catalyst before the use; FIG. 1(b) is a schematic view illustrating conceptually the state of the ash deposited on the oxidation catalyst; FIG. 1(c) is a schematic view illustrating conceptually the state in which the movable silver compound moves onto the ash surface; and FIG. 1(d) is a schematic view illustrating conceptually the state in which the silver-containing substance ahs precipitated on the surface of the ash deposited on the oxidation catalyst.
[FIG. 2] FIG. 2 is a schematic diagram illustrating the preferred embodiment of the exhaust gas purification device in accordance with the present invention in a state of connection to the internal combustion engine.
[FIG. 3] FIG. 3 is a flowchart illustrating the preferred embodiment of control in the case where the control is performed by the first control means in accordance with the present invention so as to implement the lean gas supply step according to the particulate matter deposition amount and catalyst temperature.
[FIG. 4] FIG. 4 is a flowchart illustrating the preferred embodiment of the control performed by the second control means in accordance with the present invention.
[FIG. 5] FIG. 5 is a graph illustrating 50% PM oxidation temperatures before the ash deposition and after the ash disposition in the exhaust gas purification device using the oxidation catalyst obtained in Examples 1 to 7 and Comparative Examples 1 to 5.
[FIG. 6] FIG. 6 is a graph illustrating the XRD pattern of the catalytic component of the oxidation catalysts obtained in Examples 1 to 4 and Comparative Example 3, the catalytic component being supported on a DPF.

### MODES FOR CARRYING OUT THE INVENTION

The preferred embodiments of the present invention will be described below in greater detail.

First, the exhaust gas purification device in accordance with the present invention will be explained. Thus, the exhaust gas purification device in accordance with the present invention includes an oxidation catalyst for oxidizing and purifying particulate matter contained in exhaust gas from an internal combustion engine, wherein
the oxidation catalyst is provided with a support constituted by Ca sulfate, and silver sulfate supported on the support.

The support in such an oxidation catalyst is constituted by Ca sulfate. In the present invention, as a result of using such a metal salt as the support, the support has properties very close to those of ash. Therefore, even when the ash has deposited, the silver-containing substance supported on the support can move efficiently to the ash surface. As a consequence the decrease in catalytic activity caused by the deposition of ash can be sufficiently inhibited. Further, from the standpoint of enabling the demonstration of a higher catalytic activity and a more complete inhibition of the decrease in catalytic activity by the deposition of ash, Ca sulfate is used for the support. When Ca sulfate is used as the metal salt, since the ash is basically the same component, the silver-containing substance can be dispersed to a higher degree on the ash surface and a higher catalytic activity can be demonstrated even after the deposition of ash.

From the standpoint of enabling the inclusion of a large amount of the silver-containing substance in a state with high dispersivity, it is preferred that the support constituted by such a metal salt be used in a particulate form. When the support is in a particulate form, the average primary particle diameter of the support particles is preferably 0.1 nm to 500 nm, more preferably 1 nm to 50 nm. The average primary particle diameter of the support can be measured by calculations, with the Scherrer's equation, from the line width of a powder X-ray diffraction peak obtained by using an X-ray diffractometer.

Further, when the support is in a particulate form, the average secondary particle diameter of the support particles is preferably 0.1 µm to 10 µm, more preferably 0.1 µm to 1.0 µm. Where the average secondary particle diameter is less than the aforementioned lower limit, the particles easily aggregate under a high-temperature atmosphere and the catalytic activity tends to decrease. Meanwhile, where the aforementioned upper limit is exceeded, contact with PM is lost and, therefore, the activity decreases and the particles are difficult to support on the filter. The average secondary particle diameter of the support can be measured using a particle size distribution measuring apparatus of a laser diffraction type.

The specific surface area of the support is preferably 0.1 m²/g to 300 m²/g, more preferably 1 m²/g to 100 m²/g. Where the specific surface area is less than the aforementioned lower limit, the silver-containing substance cannot be sufficiently supported. Meanwhile, where the aforementioned upper limit is exceeded, it becomes difficult for the silver-containing substance to move to the ash.

A method for manufacturing such a support is not particularly limited and a well-known method suitable for manufacturing the above-mentioned metal salt can be used as appropriate. Further, a commercial metal salt may be used for such a support, and the size thereof may be adjusted, as appropriate, by milling with a ball mill or the like.

In the oxidation catalyst, the silver-containing substance is supported on the support. The silver-containing substance is silver sulfate. In the present invention, as a result of using such a silver-containing substance, the Ag element contained in the silver-containing substance becomes an Ag ion, or the Ag element contained in the silver-containing substance is converted into AgSO₄ (movable silver compound: referred to as Ag ion or AgSO₄ in the present invention; this compound can efficiently move onto the ash surface) by receiving a sulfuric acid ion (SO₄²⁻) from the ash. The silver-containing substance, which is the catalytic component, can be moved to the portion of the ash surface, which can come into contact with the exhaust gas, to obtain a sufficiently dispersed state thereof. Therefore, the decrease in the number of contact points of the Ag element and PM can be sufficiently inhibited even after the ash has deposited on the catalyst. Thus, in accordance with the present invention, as a result of using the aforementioned support and the aforementioned silver-containing substance, the ash that has deposited during the use of the catalyst can be used as the support for the silver-containing substance, and a sufficiently high catalytic activity can be demonstrated even after the deposition of ash.

From the standpoint of obtaining a higher catalytic activity, metallic silver, silver oxide, silver carbonate, silver sulfate, and silver phosphate are preferred, and silver and silver sulfate are more preferred as the silver-containing substance. In the present invention, silver sulfate is used as the silver-containing substance. Those silver oxide, silver carbonate, silver sulfate, and silver phosphate can be also generated during the use of the catalyst by a process in which the silver element contained in the silver-containing substance is converted into silver sulfate (Ag₂SO₄) by receiving a sulfate ion (SO₄²⁻) from the ash, or oxidized by oxygen contained in the atmospheric gas into silver oxide (Ag₂O), or converted into silver carbonate (Ag₂CO₃) by adsorption, as CO₃²⁻, of CO₂ or CO generated by oxidation of the particulate matter, or converted into silver phosphate (Ag₃PO₄) by receiving a phosphoric acid ion from the ash. Thus, the form of the silver-containing substance also changes depending on the type of the support used, or the atmosphere of the exhaust gas during the use, or the proceeding reactions. The silver-containing substances may be included individually or in a mixture of two or more thereof. The type of the support or the type of the silver-containing substance supported on the support can be confirmed by determining an X-ray diffraction pattern by X-ray diffraction measurements to determine the types of the present crystals from the positions of peaks.

A method for supporting the silver-containing substance is not particularly limited, and a well-known method can be used as appropriate. For example, a method of using a dispersion or sol of a silver-containing substance or a precursor thereof and coating on the support surface (with optional subsequent calcination), or a method of supporting on a support by vapor deposition (for example, chemical vapor deposition, physical vapor deposition, and sputtering vapor deposition) can be used as appropriate.

The form of the oxidation catalyst is in the form supported on a filter. The filter is a particulate filter (DPF). Materials of the filter are not particularly limited, and well-known materials can be used as appropriate. Examples of suitable materials include ceramics such as cordierite, silicon carbide, mullite, and aluminum titanate, and metals such as stainless steel including chromium and aluminum. The oxidation catalyst is used in the form supported on a filter, and from the standpoint of obtaining a higher particulate matter oxidation capacity, the catalyst including the support and the silver-containing substance is in the form supported on a particulate filter.

Further, it is preferred that such a filter have pores with an average pore diameter of 1 µm to 300 µm. By using a base material having such an average pore diameter, it is possible to oxidize and purify the particulate matter with higher efficiency.

The oxidation catalyst is used in the form supported on the filter, and the coat layer is formed from the oxidation catalyst, and the thickness of the coat layer is 2 µm.

Such a filter preferably has a porosity for 30% to 70% (more preferably 40% to 65%). The "porosity" as referred to herein is a volume ratio of void portions inside the base material. Where the porosity is less than the aforementioned lower limit, the pores tend to be easily clogged by the particulate matter contained in the exhaust gas. Meanwhile, where the aforementioned upper limit is exceeded, the particulate matter contained in the exhaust gas is difficult to collect and the filter strength tends to decrease.

Further, where the oxidation catalyst is used in the form supported on the filter, a method for manufacturing such an oxidation catalyst is not particularly limited. For example, a method by which a catalyst including the support and the silver-containing substance is prepared in advance and then supported on the filter, or a method by which a catalyst including a support and a silver-containing substance is supported on a filter by implementing a step of supporting the support on the filter and a step of supporting the silver-containing substance on the support supported on the filter can be used as appropriate. A method for supporting the catalyst or support on the filter is not particularly limited, and a well-known method can be used as appropriate. For example, a method by which a slurry of a catalyst or support is prepared and the slurry is coated on a filter (with optional subsequent calcination) can be used as appropriate. Well-known other components that can be used in catalysts for oxidizing particulate matter may be used, as appropriate, for the oxidation catalyst within a range in which the effect of the present invention is not lost.

Further, in the exhaust gas purification device in accordance with the present invention, the particulate matter container in the gas (exhaust gas) discharged from an internal combustion engine is oxidized and removed by the oxidation catalyst. Therefore, in the exhaust gas purification device in accordance with the present invention, the oxidation catalyst may be disposed to enable the contact of the exhaust gas with the oxidation catalyst. For example, the oxidation catalyst may be disposed in a gas flow channel inside an exhaust pipe through which the exhaust gas flows from the internal combustion engine. The internal combustion engine is not particularly limited, and a well-known internal combustion engine can be used. For example, an automobile engine (gasoline engine, diesel engine, and the like) may be used.

Other features of the exhaust gas purification device in accordance with the present invention are not particularly limited, provided that the device is equipped with the oxidation catalyst. However, it is preferred that the exhaust gas purification device be further provided with first control means for performing control such that a step (lean gas supply step) of bringing the exhaust gas with a lean air-fuel ratio into contact with the oxidation catalyst and a step (rich gas supply step) of bringing the exhaust gas with a rich air-fuel ratio into contact with the oxidation catalyst be implemented alternately. By implementing alternately such lean gas supply step and right gas supply step, it is possible to oxidize and purify the particulate matter with good efficiency. Further, in accordance with the present invention, the aforementioned rich gas supply step can cause the precipitation of metallic silver on the support or the surface of ash that has precipitated on the support, thereby increasing the catalyst activity. Accordingly, in accordance with the present invention, the rich gas supply step is implemented, as appropriate, as a catalyst activation step, and the lean gas supply step is preferably implemented thereafter to purify the particulate matter. Such first control means may implement alternately, a plurality of times, the step of bringing the exhaust gas with a lean air-fuel ratio into contact with the oxidation catalyst and the step of bringing the exhaust gas with a rich air-fuel ratio into contact with the oxidation catalyst (lean gas supply step : catalyst activation step).

Thus, the first control means can perform the control such as to bring the exhaust gas with a rich or lean ratio of air and fuel (air-fuel ratio), according to the step to be implemented, into contact with the oxidation catalyst. A method for bringing the exhaust gas with a rich or lean air-fuel ratio into contact with the oxidation catalyst by using such first control means is not particularly limited, and a well-known method can be used as appropriate. Thus, examples of methods that can be used, as appropriate, include: a method by which a map that represents the relationship between data, such as the engine revolution speed, accelerator depression amount, throttle opening degree, torque, intake flow rate, and fuel injection amount, and the air-fuel ratio of exhaust gas is created in advance and the operation state of the internal combustion engine is changed on the basis of the map, thereby setting the air-fuel ratio of the exhaust gas to the specific atmosphere and bringing the resultant exhaust gas into contact with the oxidation catalyst over a specific period of time, a method by which data relating to the atmosphere are determined using various sensors and the operation state of the internal combustion engine is changed, thereby setting the air-fuel ratio of the exhaust gas to the specific atmosphere and bringing the resultant exhaust gas into contact with the oxidation catalyst over a specific period of time, and a method by which data relating to the atmosphere are determined using various sensors and the air or fuel are separately added to the exhaust gas by separately provided air introducing means (for example, an air pump) or fuel injection means, thereby setting the air-fuel ratio of the exhaust gas to the specific atmosphere (lean or rich) and bringing the resultant exhaust gas into contact with the oxidation catalyst over a specific period of time. The expression "air-fuel ratio is rich" used herein means that the atmosphere is such that the equivalent ratio of fuel and oxygen (fuel/oxygen) in the exhaust gas is greater than 1 (more preferably, the atmosphere in which the equivalent ratio is 1.05 to 1.5). Further, the expression "air-fuel ratio is lean" used herein means that the atmosphere is such that the equivalent ratio of fuel and oxygen (fuel/oxygen) in the exhaust gas is less than 1 (more preferably, the atmosphere in which the equivalent ratio is 0.5 to 0.95).

Further, from the standpoint of efficiently preventing the pressure loss caused by the deposition of particulate matter, it is preferred that the first control means be used such that can perform the control such that the catalyst temperature rises in the lean gas supply step when the particulate matter deposition amount is determined to exceed a reference value (threshold). A method for calculating such a particulate matter deposition amount is not particularly limited, and a well-known method can be used as appropriate. Examples of suitable methods include a method by which a map relating to the operation state of the internal combustion engine, usage history of the exhaust gas purification device, and the particulate matter deposition amount is created in advance, and the particulate matter deposition amount is calculated on the basis of the map, a method by which the difference in pressure of the exhaust gas before and after the oxidation catalyst is detected, a map relating to the pressure difference and the particulate matter deposition amount is created in advance, and the particulate matter deposition amount is calculated on the basis for the map, a method for calculating the particulate matter deposition amount by correcting the pressure difference with the intake air amount, and a method using all those methods. Further, a variety of sensors necessary for calculating the particulate matter deposition amount may be used, as appropriate, in the exhaust gas purification device in accordance with the present invention.

Further, since the optimum implementation time for each of the aforementioned steps and the optimum number of times (number of cycles) each step is implemented differ depending on the type of oxidation catalyst and the temperature thereof, it is preferred that the first control means perform the control such as to implement each step while changing the implementation time of each step and the number of cycles thereof according to the oxidation catalyst temperature. A method for determining the implementation time and the number of cycles is not particularly limited, and a method may be used by which a map representing the relationship between the oxidation catalyst temperature and the variations in the particulate matter purification efficiency determined by the variations in the period of time in which each step is implemented and the number of implementation cycles thereof is created in advance, and the implementation time and the number of cycles are determined on the basis of the map.

Further, the first control means is not particularly limited, provided that the control such as described hereinabove can be performed. For example, an engine control unit (ECU) connected to the internal combustion engine may be used. The ECU is configured as a computer in which a microprocessor is combined with a peripheral device such as a ROM and a RAM necessary for the operation thereof. The exhaust gas purification device in accordance with the present invention may also include means for detecting a catalyst temperature, a difference in pressure of the exhaust gas before and after the oxidation catalyst, a vehicle speed, an engine revolution speed, and a torque in order to enable the aforementioned control with the first control means. Well-known detection means can be used, as appropriate, for this purpose.

The exhaust gas purification device in accordance with the present invention preferably also includes ash deposition amount estimation means for estimating the amount of ash in the exhaust gas that has deposited on the oxidation catalyst. A method for estimating the ash deposition amount on the oxidation catalyst is not particularly limited, and a well-known method can be used as appropriate. Examples of suitable methods include a method by which a map representing the relationship between the operation state of the internal combustion engine, the usage history of the exhaust gas purification device, and the ash deposition amount is created in advance and the ash deposition amount is estimated on the basis of the map, and a method by which a step of bringing the exhaust gas with a lean air-fuel ratio into contact with the oxidation catalyst and a step of bringing the exhaust gas with a rich air-fuel ratio into contact with the oxidation catalyst are implemented alternately by the first control means, the particulate matter is sufficiently removed, a difference in pressure of the exhaust gas before and after the oxidation catalyst is then detected, and the ash deposition amount on the oxidation catalyst is estimated from the detected difference in pressure.

The ash deposition amount estimation means is not particularly limited, provided that the ash deposition amount deposited on the oxidation catalyst can be estimated. For example, the engine control unit (ECU) connected to the internal combustion engine may be used for this purpose. Further, the exhaust gas purification device in accordance with the present invention may further include means for detecting, as appropriate, the necessary data, such as a difference in pressure between the exhaust gas before and after contact with the oxidation catalyst, a vehicle speed, an engine revolution speed, and a torque, for enabling the estimation of the ash amount with the ash deposition amount estimation means.

Where the exhaust gas purification device in accordance with the present invention includes the ash deposition amount estimation means, it is more preferred that second control means be included for performing control such that a step of bringing the exhaust gas with a rich air-fuel ratio into contact with the oxidation catalyst be implemented when the ash deposition amount estimated by the ash deposition amount estimation means exceeds a reference value (threshold). As a result of controlling with the second control means the ratio of fuel and oxygen (air-fuel ratio) in the exhaust gas according to the estimated value of the ash deposition amount so that the exhaust gas with a rich atmosphere is brought into contact with the oxidation catalyst, metallic Ag is precipitated on the surface of the deposited ash, the opportunity for the PM to come into contact with the active sites can be sufficiently maintained, and a sufficiently high PM oxidation activity can be maintained. A method for bringing the exhaust gas with the atmosphere with a rich air-fuel ratio into contact with the oxidation catalyst with the second control means is not particularly limited. For example, a method similar to the method for bringing the gas with a specific atmosphere into contact, which has been explained with reference to the above-described first control means (for example, a method by which the air-fuel ratio of the exhaust gas is set to a rich atmosphere by charging the operation state of the internal combustion engine) may be used.

Further, the second control means is no particularly limited. For example, the engine control unit (ECU) connected to the internal combustion engine may be used therefor. In the exhaust gas purification device in accordance with the present invention, the second control means may be also configured to be capable of inputting data from the ash deposition amount estimation means in order to enable the control with the second control means, and also configured to include further means for detecting a difference in pressure between the exhaust gas before and after contact with the oxidation catalyst, a vehicle speed, an engine revolution speed, and a torque in order to measure the exhaust gas atmosphere.

The exhaust gas purification method in accordance with the present invention will be explained below. The exhaust gas purification method in accordance with the present invention uses an exhaust gas purification device including an oxidation catalyst for oxidizing and purifying particulate matter contained in exhaust gas from an internal combustion engine to bring the exhaust gas into contact with the oxidation catalyst, thereby purifying the particulate matter, wherein the oxidation catalyst is provided with a support constituted by Ca sulfate and a silver-containing substance, which is silver sulfate, supported on the support.

Such an exhaust gas purification device is the same as the abovementioned exhaust gas purification device in accordance with the present invention. A method for bringing the exhaust gas into contact with the oxidation catalyst in such an exhaust gas purification device is not particularly limited, and a well-known method can be used, as appropriate, for this purpose. For example, a method may be used by which the exhaust gas from an internal combustion engine is brought into contact with an oxidation catalyst by disposing the oxidation catalyst in accordance with the present invention in an exhaust gas pipe that allows the exhaust gas discharged from the internal combustion engine to flow therethrough.

In the exhaust gas purification method, a step of bringing the exhaust gas with a lean air-fuel ratio into contact with the oxidation catalyst (lean gas supply step) and a step of bringing the exhaust gas with a rich air-fuel ratio into contact with the oxidation catalyst (rich gas supply step) are preferably implemented alternately. As a result of implementing those steps alternately, metallic Ag can be precipitated inside the catalyst in the step of bringing the exhaust gas with a rich air-fuel ratio into contact, and where the exhaust gas with a lean air-fuel ratio then comes into contact with the oxidation catalyst, the reactions represented by the above-described reaction equations (4) and (5) can be efficiently induced and a higher oxidation capacity with respect to the particulate matter can be obtained. Thus, in accordance with the present invention, by implementing the step of bringing the exhaust gas with a rich air-fuel ratio into contact with the oxidation catalyst, it is possible to precipitate metallic Ag inside the catalyst and increase the catalytic activity, and the catalyst can be activated by such a step. The implementation time of each step differs depending on the design of the oxidation catalyst and type of the internal combustion engine and cannot be determined uniquely, but generally speaking, the implementation time of the lean gas supply step is, for example, 100 hr to 500 hr, and the implementation time of the rich gas supply step is, for example, 1 min to 60 min.

From the standpoint of efficiently preventing the pressure loss caused by the particulate matter deposition, it is preferred that the aforementioned steps be implemented when the estimated deposition amount of particulate matter is determined to exceed a reference value (threshold). In this case, it is preferred that the steps be implemented under a temperature condition of 350°C to 650°C in order to oxidize and purify the particulate matter sufficiently. Where the temperature is less than the aforementioned lower limit, the particulate matter is difficult to oxidize and purify sufficiently. Conversely, where the aforementioned upper limit is exceeded, the amount of fuel consumed on raising the catalyst temperature increases and fuel efficiency tends to degrade.

In such an exhaust gas purification method, it is preferred that the exhaust gas purification device be configured to include further ash deposition amount estimation means for estimating the amount of ash in the exhaust gas that has deposited on the oxidation catalyst. In this case, it is preferred that the step of bringing the exhaust gas with a rich air-fuel ratio into contact with the oxidation catalyst (rich gas supply step) be implemented when the ash deposition amount estimated by the ash deposition amount estimation means exceeds a reference value (threshold). By implementing the rich gas supply step when the ash deposition amount exceeds the reference value (threshold), it is possible to precipitate metallic silver on the ash surface and inhibit more effectively the decrease in catalyst activity caused by the ash deposition. Thus, by implementing the rich gas supply step when the ash deposition amount exceeds the reference value (threshold), metallic silver can be precipitated on the ash surface. Therefore, a higher catalyst activity can be maintained even when the ash is deposited.

The reference value (threshold) of the ash deposition amount differs depending on the design of the oxidation catalyst and cannot be determined uniquely. The value thereof may be set, as appropriate, from the standpoint of particulate matter oxidation activity. Further, when the step of bringing the exhaust with a rich air-fuel ratio into contact with the oxidation catalyst (rich gas supply step) is implemented when the ash deposition amount estimated by the ash deposition amount estimation means exceeds the reference value, it is preferred that the rich gas supply step be implemented for 1 min to 60 min under a temperature condition of 350°C to 550°C. Where the temperature and time are below the aforementioned lower limits, silver (metal) is difficult to precipitate sufficiently on the ash surface and the catalytic activity is difficult to increase sufficiently. Conversely, where the aforementioned upper limits are exceeded, the amount of fuel consumed on the implementation of the rich gas supply step increases and fuel efficiency tends to degrade.

A preferred embodiment of the exhaust gas purification device and exhaust gas purification method in accordance with the present invention will be explained below in greater detail with reference to the appended drawings. In the explanation and drawings below, like or corresponding elements are assigned with like reference numerals, and the redundant explanation thereof is herein omitted.

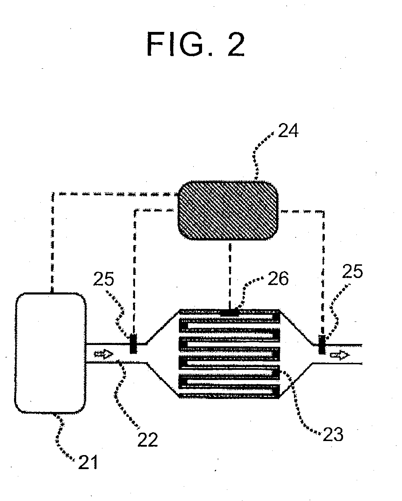

FIG. 2 is a schematic diagram illustrating the preferred embodiment of the exhaust gas purification device in accordance with the present invention in a state of connection to an internal combustion engine. The embodiment shown in FIG. 2 includes an internal combustion engine 21, an exhaust gas pipe 22 connected to the internal combustion engine, an oxidation catalyst 23 disposed in a gas flow channel inside the exhaust gas pipe, control means 24 connected to the internal combustion engine, a pressure sensor 25 that can measure the pressure of the exhaust gas before and after the exhaust gas comes into contact with the oxidation catalyst 23, and a temperature sensor 26 that can measure the temperature of the oxidation catalyst 23.

In the embodiment illustrated by FIG. 2, an automobile diesel engine is used as the internal combustion engine 21. The exhaust gas pipe 22 is not particularly limited, and a well-known exhaust gas pipe can be used as appropriate. In the present embodiment, a commercial pipe is used as the exhaust gas pipe 22. Further, in the embodiment shown in FIG. 2, an oxidation catalyst in the form in which a catalyst provided with the aforementioned support and the aforementioned silver-containing substance is supported on a particulate filter (DPF) is used as the oxidation catalyst 23. An engine control unit (ECU) is used as the control means 24.

Further, in the control means 24, the air-fuel ratio atmosphere of the exhaust gas that is brought into contact with the oxidation catalyst is determined on the basis of a map representing the relationship between the air-fuel ratio of the exhaust gas and data such as the engine revolution speed of the internal combustion engine 21, accelerator depression amount, throttle opening degree, torque, intake flow rate, and fuel injection amount, and the air-fuel ratio atmosphere of the exhaust gas can be controlled by changing, as appropriate, the amount of fuel added to the internal combustion engine 21, engine revolution speed, torque, intake amount, etc. (the aforementioned first control means). The pressure sensor 25 is connected to the control means 24, the difference in pressure of the exhaust gas before and after the oxidation catalyst is detected on the basis of data inputted from the pressure sensor 25, and the particulate matter deposition amount can be also calculated in the control means on the basis of a map (created in advance) relating to the difference in pressure and the particulate matter deposition amount.

In the control means 24, the ash deposition amount can be also estimated on the basis of a map (created in advance) relating to the history of the operation state (revolution speed or torque) of the internal combustion engine and the ash deposition amount (the aforementioned ash deposition amount estimation means). Further, in the control means 24, the air-fuel ratio atmosphere of the exhaust gas can be also controlled by changing, as appropriate, the amount of fuel added to the internal combustion engine 21, engine revolution speed, torque, and intake amount on the basis of the calculated ash deposition amount (the aforementioned second control means). Commercial devices are used as the pressure sensor 25 and the temperature sensor 26. The arrows in FIG. 2 show schematically the flow of gas.

The preferred example of the control performed by the first control means and the control performed by the second control means when the exhaust gas is purified with the exhaust gas purification device of the embodiment illustrated by FIG. 2 will be explained below with reference to a flowchart.

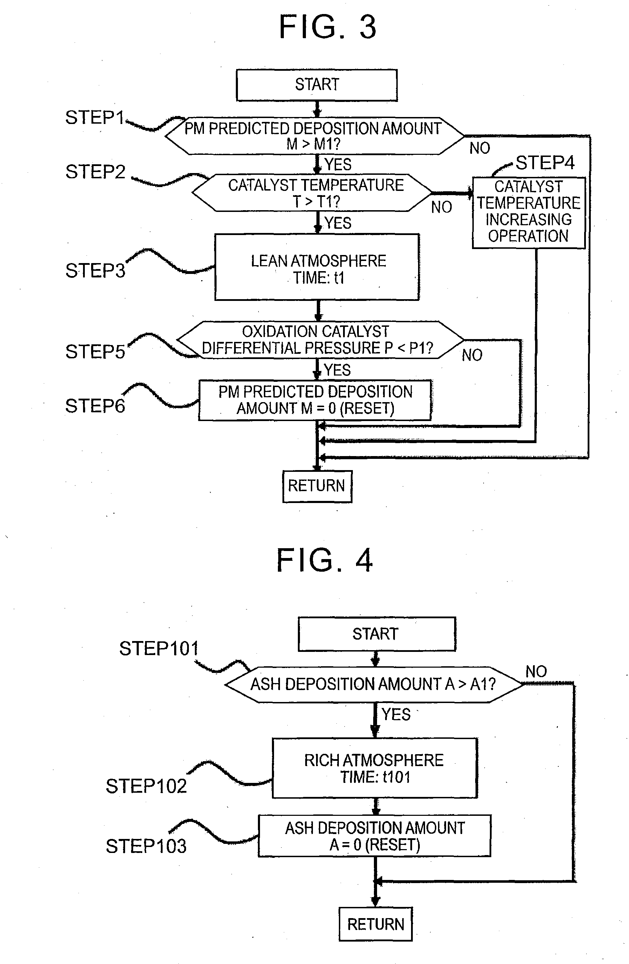

FIG. 3 is a flowchart illustrating the preferred embodiment of control in the case where the control (control performed to raise the catalyst temperature in the lean gas supply step) is performed by the first control means in accordance with the present invention so as to implement the lean gas supply step according to the particulate matter deposition amount and catalyst temperature. Thus, initially, in step 1, in the control means 24 a difference in pressure of the exhaust gas before and after the oxidation catalyst is detected on the basis of data inputted from the pressure sensor 25 that are inputted to the control means 24, a particulate matter deposition amount M is calculated on the basis of the data, and it is determined whether or not the determined particulate matter deposition amount M (estimated value) exceeds a reference value M1. Where the particulate matter deposition amount M exceeds the reference value Ml, the processing advances to step 2, and where the particulate matter deposition amount M is equal to or less than the reference value Ml, the processing returns to the start. Further, in step 2, the temperature T of the oxidation catalyst 23 is calculated on the basis of data inputted from the temperature sensor 26 in the control means 24, and it is determined whether or not the temperature T of the oxidation catalyst 23 is higher than a reference temperature T1. Where the temperature T of the oxidation catalyst 23 is higher than the reference temperature Tl, the processing advances to step 3, and where the temperature T of the oxidation catalyst 23 is equal to or less than the reference temperature Tl, the processing advances to step 4. In step 4, the operation of raising the temperature of the oxidation catalyst 23 is performed, and the processing then returns to the start. A method of changing the operation state of the internal combustion engine 21 and raising the exhaust gas temperature is used as the operation of raising the temperature implemented in step 4. Further, in step 3, the operation of implementing a step of bringing the exhaust gas with an atmosphere with a lean air-fuel ratio into contact with the oxidation catalyst 23 for a time t1 is implemented, the particulate matter contained in the exhaust gas is oxidized, and the processing advances to step 5. In step 5, it is determined in the control means 24 whether or not the difference P (difference in pressure P) in pressure of the exhaust gas before and after it comes into contact with the oxidation catalyst 23 is less than P1 on the basis of data inputted from the pressure sensor 15. Where the difference in pressure P is less than PI, the processing advances to step 6, and where the difference in pressure P is equal to or greater than PI, the processing returns to the start. Further, in step 6, the estimated deposition amount M of the particulate matter calculated in the control means 24 is reset to 0 and the processing then returns to the start.

The time t1 in step 3 is determined in advance from the standpoint of particulate matter purification efficiency. Further, the setting of this temperature T1 can be changed, as appropriate, to a temperature advantageous for purifying the particulate matter according to the design of the exhaust gas purification device, for example, the type of the oxidation catalyst used. For example, the temperature T1 may be set to any temperature within a range of 350°C to 650°C, and the particulate matter purification step may be implemented in a high-temperature state.

FIG. 4 is a flowchart illustrating the preferred embodiment of the control performed by the second control means. Thus, initially, in step 101, an ash deposition amount A is calculated in the control means 24, and it is determined whether the ash deposition amount estimated thereby exceeds a reference value A1. Where the ash deposition amount A exceeds the reference value A1, the processing advances to step 102, and where the ash deposition amount A is equal to or less than the reference value A1, the processing returns to the start. In step 102, a step of bringing the exhaust gas of an atmosphere with a rich air-fuel ratio into contact with the oxidation catalyst 23 for a time t101 (rich gas supply step) is implemented by the control means 24, the ash contained in the exhaust gas is oxidized, and the processing advances to step 103. The step of bringing the rich-atmosphere exhaust gas into contact in step 102 can be reached by changing, as appropriate, the operation state of the internal combustion engine with the control means 24. Further, in step 103, the estimated deposition amount A of ash calculated in the control means 24 is reset to 0, and the processing then returns to the start. The time t101 in step 102 is determined in advance from the standpoint of particulate matter purification capacity of the oxidation catalyst. With the rich gas supply step in step 102, Ag can be sufficiently precipitated on the ash surface and a sufficient particulate matter purification activity of the oxidation catalyst can be maintained.

The preferred embodiment of the exhaust gas purification device and exhaust gas purification method in accordance with the present invention are explained in greater detail with reference to FIGS. 2 to 4, but the exhaust gas purification device and the exhaust gas purification method in accordance with the present invention are not limited to the above-described embodiments. For example, in the embodiment shown in FIG. 2, the air-fuel ratio atmosphere of the exhaust gas that is to be brought into contact with the oxidation catalyst is controlled in the first and second control means by changing the operation state of the internal combustion engine 10. However, a method for controlling the air-fuel ratio atmosphere of the exhaust gas that is to be brought into contact with the oxidation catalyst in the exhaust gas purification device in accordance with the present invention is not particularly limited. For example, a method for controlling the air-fuel ratio atmosphere of the exhaust gas that is to be brought into contact with the oxidation catalyst may be used in which an air-fuel ratio sensor that can measure the concentration of oxygen in the exhaust gas in a region between the internal combustion engine 21 and the oxidation catalyst 23, fuel supply means (for example, a fuel addition device of a spraying system) or an air pump is connected to the exhaust gas pipe 22, the state of the air-fuel ratio is determined by measuring the air-fuel ratio of the exhaust gas by using the air-fuel sensor, and the fuel or air is introduced into the exhaust gas that comes into contact with the oxidation catalyst 23 according to the state of the air-fuel ratio. Thus, the features of the exhaust gas purification device in accordance with the present invention are not particularly limited, provided that it is equipped with the aforementioned oxidation catalyst. Further, in the embodiments illustrated by FIGS. 2 to 4, the control is performed by the first control means such that the lean gas supply step is implemented according to the particulate matter deposition amount or catalyst temperature, but the control method that can be used in the first control means is not limited to the abovementioned embodiment, provided that the lean gas supply step and the rich gas supply step are implemented alternately. Further, when the second control means is used, the control method thereof is not particularly limited to the above-mentioned embodiment, and any method can be used, as appropriate, provided that the control can be performed such that the step of bringing the exhaust gas with a rich air-fuel ratio into contact with the oxidation catalyst is impalement when the estimated value of the ash deposition amount exceeds the reference value.

### Examples

The present invention will be described below in greater detail on the basis of examples and comparative examples, but the present invention is not limited to the below-described examples. Reference examples and comparative examples are not according to the invention.

### (Example 1)

### <Preparation of Oxidation Catalyst>

Ion-exchange water was added to calcium sulfate hemihydrate (calcined gypsum, produced by Wako Pure Chemical Industries, Ltd.), and a slurry including calcium sulfate particles with an average secondary particle diameter of 0.6 µm was formed by milling in a ball mill. Then, a commercial DPF (diameter 30 mm, length 50 mm, porosity 60%, average pore diameter 30 µm, produced by Nippon Gaishi Co., Ltd.) made from cordierite was prepared, and the slurry was impregnated therein so as to enter the partition wall pores of the DPF. The excess slurry was then removed by using a suction device from the DPF impregnated with the slurry, followed by drying for 16 hr at 110°C and then calcining for 3 hr at 500°C. Such calcination could convert the calcium sulfate hemihydrate into calcium sulfate (anhydrate) and thus could strongly support (attach) calcium sulfate (anhydrate) on the DPF. When calcium sulfate (anhydrate) was thus supported on the DPF, the supported amount (coat amount) of the calcium sulfate per 1 L of the DPF volume was 67.5 g/L.

An aqueous solution of silver sulfate was then prepared by dissolving silver sulfate (produced by Wako Pure Chemical Industries, Ltd.) in ion-exchange water at 90°C. The aqueous solution of silver sulfate was then impregnated so as to enter the partition wall pores of the DPF supporting the calcium sulfate to obtain the supported amount of silver sulfate per 1 L of the DPF volume of 10.8 g/L. The DPF impregnated with the aqueous solution of silver sulfate was then dried for 16 hr at 110°C and calcined for 3 hr at 300°C. As a result, silver sulfate was supported on calcium sulfate supported (coated) on partition walls of the DPF, and an oxidation catalyst in the form supported on the DPF was produced. The supported amount of silver sulfate per 1 L of the DPF volume was 10.8 g/L. The supported amount of silver sulfate recalculated as metallic silver per 1 L of the DPF volume was 7.5 g/L, and the supported amount of silver sulfate recalculated as metallic silver per 100 parts by mass of calcium sulfate (support) was 11.11 parts by mass. The thickness of the coat layer of the catalyst in which silver sulfate was supported on calcium sulfate supported (coated) on the partition walls of DPF was 2 µm.

### <PM Adhesion Treatment (I)>

A particulate matter (PM) was then adhered to the oxidation catalyst (PM adhesion treatment (I)) by arranging the oxidation catalyst in the central section of an exhaust gas pipe (inner diameter 30 mm, length 1000 mm) made from quartz glass, then introducing, the particulate matter generated using a combustion particle generator (Combustion Aerosol Standard; CAST, Matter Engineering Co.), together with air at room temperature (25°C), from one opening (referred to hereinbelow as "inlet port") of the exhaust gas pipe thereinto, and bringing the mixture of PM and air into contact with the oxidation catalyst under a condition of room temperature (25°C). In such PM adhesion treatment, the flow rate of air to the oxidation catalyst was 20 L/min. The amount of PM that has adhered to the oxidation catalyst in such PM adhesion treatment was 2 g/L per 1 L of the DPF volume.

### <PM Purification Treatment (I)>

Pretreatment was performed by using the exhaust gas pipe including the oxidation catalyst with the PM adhered thereto in the PM adhesion treatment (I), introducing N₂ gas for 15 min under the conditions of a temperature of the gas flowing to the catalyst being 500°C and the flow rate thereof being 30 L/min from the inlet port (the opening into which the aforementioned mixture of PM and air was introduced), and supplying the N₂ gas to the oxidation catalyst, followed by cooling until ambient temperature (25°C) is established.

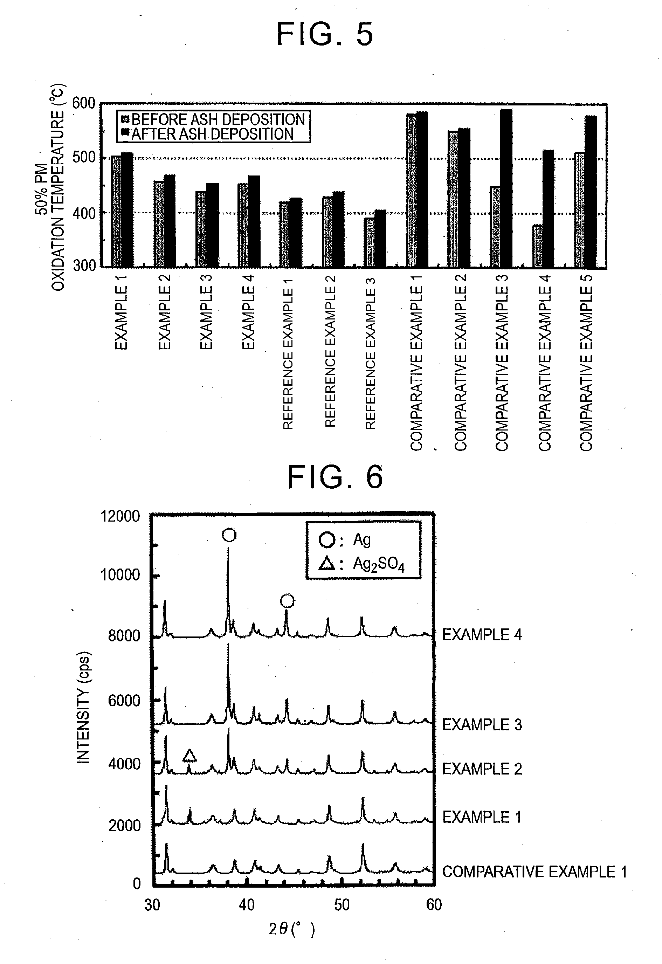

A lean-atmosphere model gas A (model of a gas with a lean air-fuel ratio) shown in Table 1 was then introduced from the inlet port of the exhaust gas pipe under the condition of a flow rate of 30 L/min, while raising the temperature at a rate of 20°C/min from 30°C to 810°C (inlet gas temperature at the catalyst), the model gas A was brought into contact with the oxidation catalyst after the pretreatment, the concentrations of CO₂ and CO in the gas (outlet gas) discharged from the outlet port (another opening) of the exhaust gas pipe were measured, the amount of oxidized PM was calculated from the concentrations, the temperature (50% PM oxidation temperature) reached in inlet gas oxidation when the total amount of PM adhered to the oxidation catalyst reached 50% of the initial adhered amount was determined, and the oxidation capacity was evaluated. The results relating to the obtained 50% PM oxidation temperature are shown in FIG. 5. A catalyst can be said to have a higher PM oxidation capacity (oxidation activity) when the 50% PM oxidation temperature is low.

**[Table 1]**

| | Air-fuel ratio | O₂ (% by volume) | CO (% by volume) | H₂ (% by volume) | CO₂ (% by volume) | H₂O (% by volume) | N₂ (% by volume) |
|---|---|---|---|---|---|---|---|
| Model gas A | Lean | 10 | 0 | 0 | 10 | 10 | Balance |

### <Ash Deposition Treatment>

JIS No. 2 fuel (sulfur content 5 ppm to 7 ppm) was used and exhaust gas from an actual engine (in-line 6 cylinders) was supplied to the oxidation catalyst after the implementation of the PM purification treatment (I) to induce the deposition of ash. Thus, the actual engine (in-line 6 cylinders) was operated using the JIS No. 2 fuel (sulfur content 5 ppm to 7 ppm), the exhaust gas from the engine was introduced from the inlet port of the exhaust gas pipe, the temperature conditions were set such that the catalyst bed temperature of the oxidation catalyst reached 500°C (constant), and the exhaust gas was continuously supplied for 500 hr to the oxidation catalyst after the implementation of the PM purification treatment (I). The step of supplying the exhaust gas from the actual engine (in-line 6 cylinders) was implemented such that the same exhaust gas taken from the engine flowed under the same conditions into 12 exhaust pipes (exhaust pipes including oxidation catalysts after the PM purification treatment (I) used in Examples 1 to 7 and Comparative Examples 1 to 5: Examples 2 to 7 and Comparative Examples 1 to 5 are described below). As a result of supplying the exhaust gas in such a manner, the deposited amount of ash was the same, 13 g/L, for each oxidation catalyst, and the ash deposition thickness on the DPF partition walls, which was observed under a digital microscope, was about 50 µm for each oxidation catalyst.

### <PM Adhesion Treatment (II)>

The treatment of causing the PM to adhere was performed using the same method as in the PM adhesion treatment (I) with respect to the oxidation catalyst after the ash deposition treatment. The adhesion amount of PM was 2 g/L per 1 L of the DPF volume.

### <PM Purification Treatment (II)>

The PM was purified by the same method as in the PM purification treatment (I) by using the oxidation catalyst after the PM purification treatment (I), and the 50% PM oxidation temperature was determined. The results relating to the obtained 50% PM oxidation temperature are shown in FIG. 5.

Thus, in Example 1, the preparation of the oxidation catalyst, PM adhesion treatment (I), PM purification treatment (I), ash deposition treatment, PM adhesion treatment (II), and PM purification treatment (II) were implemented in the order of description, and the 50% PM oxidation temperature before the ash deposition treatment and after the ash deposition treatment in the exhaust gas purification device (in the present example, the model gas A simulated the exhaust gas, and the oxidation catalyst was disposed in the flow path of the exhaust gas) provided with the oxidation catalyst was determined.

### (Example 2)

The 50% PM oxidation temperature before the ash deposition treatment and after the ash deposition treatment in the exhaust gas purification device (in the present example, the model gases A and B simulated the exhaust gas, and the oxidation catalyst was disposed in the flow path of the exhaust gases) provided with the oxidation catalyst was determined in the same manner as in Example 1, except that the below-described rich gas supply treatment was implemented with respect to the oxidation catalyst before the implementation of the PM adhesion treatment (I) and the PM adhesion treatment (II). Thus, in Example 2, the preparation of the oxidation catalyst, rich gas supply treatment, PM adhesion treatment (I), PM purification treatment (I), ash deposition treatment, rich gas supply treatment, PM adhesion treatment (II), and PM purification treatment (II) were implemented in the order of description. The results relating to the obtained 50% PM oxidation temperature are shown in FIG. 5.

### <Rich Gas Supply Treatment>

A rich-atmosphere model gas B (model of a gas with a rich air-fuel ratio) shown in Table 2 was supplied for 12 min to the oxidation catalyst under the conditions of the inlet gas temperature at the catalyst of 400°C (constant) and a flow rate of 30 L/min.

**[Table 2]**

| | Air-fuel ratio | O₂ (% by volume) | CO (% by volume) | H₂ (% by volume) | CO₂ (% by volume) | H₂O (% by volume) | N₂ (% by volume) |
|---|---|---|---|---|---|---|---|
| Model gas B | Rich | 0 | 1.0 | 0.5 | 10 | 10 | Balance |

### (Example 3)

The 50% PM oxidation temperature before the ash deposition treatment and after the ash deposition treatment in the exhaust gas purification device provided with the oxidation catalyst was determined in the same manner as in Example 2, except that the inlet gas temperature at the oxidation catalyst for the model gas B in the rich gas supply treatment was changed from 400°C to 500°C. The results relating to the obtained 50% PM oxidation temperature are shown in FIG. 5.

### (Example 4)

The 50% PM oxidation temperature before the ash deposition treatment and after the ash deposition treatment in the exhaust gas purification device provided with the oxidation catalyst was determined in the same manner as in Example 2, except that the supply time for the model gas B in the rich gas supply treatment was changed from 12 min to 60 min. The results relating to the obtained 50% PM oxidation temperature are shown in FIG. 5.

### (Reference Example 1)

### <Preparation of Oxidation Catalyst>

Ion-exchange water was added to calcium phosphate (produced by Wako Pure Chemical Industries, Ltd.), and a slurry including calcium phosphate particles with an average secondary particle diameter of 0.6 µm was formed by milling in a ball mill. Then, a commercial DPF (diameter 30 mm, length 50 mm, porosity 60%, average pore diameter 30 µm, produced by Nippon Gaishi Co., Ltd.) made from cordierite was prepared, and the slurry was impregnated therein so as to enter the partition wall pores of the DPF. The excess slurry was then removed by using a suction device from the DPF impregnated with the slurry, followed by drying for 16 hr at 110°C and then calcining for 3 hr at 500°C. Such calcination could strongly support (attach) calcium phosphate on the DPF. When calcium phosphate was thus supported on the DPF, the supported amount (coat amount) of the calcium phosphate per 1 L of the DPF volume was 67.5 g/L. The results relating to the obtained 50% PM oxidation temperature are shown in FIG. 5.

An aqueous solution of silver sulfate was then prepared by dissolving silver sulfate (produced by Wako Pure Chemical Industries, Ltd.) in ion-exchange water at 90°C. The aqueous solution of silver sulfate was then impregnated so as to enter the partition wall pores of the DPF supporting the calcium phosphate to obtain the supported amount of silver sulfate per 1 L of the DPF volume of 10.8 g/L. The DPF impregnated with the aqueous solution of silver sulfate was then dried for 16 hr at 110°C and calcined for 3 hr at 300°C. As a result, silver sulfate was supported on calcium phosphate supported (coated) on partition walls of the DPF, and an oxidation catalyst in the form supported on the DPF was produced. The supported amount of silver sulfate per 1 L of the DPF volume was 10.8 g/L. The supported amount of silver sulfate recalculated as metallic silver per 1 L of the DPF volume was 7.5 g/L, and the supported amount of silver sulfate recalculated as metallic silver per 100 parts by mass of calcium phosphate (support) was 11.11 parts by mass.

The 50% PM oxidation temperature before the ash deposition treatment and after the ash deposition treatment in the exhaust gas purification device provided with the oxidation catalyst was determined in the same manner as in Example 1, except that the oxidation catalyst obtained in the above-described manner was used. Thus, in Reference Example 1, the preparation of the oxidation catalyst, PM adhesion treatment (I), PM purification treatment (I), ash deposition treatment, PM adhesion treatment (II), and PM purification treatment (II) were implemented in the order of description. The results relating to the obtained 50% PM oxidation temperature are shown in FIG. 5.

### (Reference Example 2)

The 50% PM oxidation temperature before the ash deposition treatment and after the ash deposition treatment in the exhaust gas purification device provided with the oxidation catalyst was determined in the same manner as in Example 2, except that the oxidation catalyst obtained by using the same method for preparing an oxidation catalyst as was used in Reference Example 1 was used as the oxidation catalyst. Thus, in Reference Example 2, the preparation of the oxidation catalyst, PM adhesion treatment (I), PM purification treatment (I), ash deposition treatment, rich gas supply treatment, PM adhesion treatment (II), and PM purification treatment (II) were implemented in the order of description. The results relating to the obtained 50% PM oxidation temperature are shown in FIG. 5.

### (Reference Example 3)

The 50% PM oxidation temperature before the ash deposition treatment and after the ash deposition treatment in the exhaust gas purification device provided with the oxidation catalyst was determined in the same manner as in Reference Example 2, except that the inlet gas temperature at the oxidation catalyst for the model gas B in the rich gas supply treatment was changed from 400°C to 500°C. The results relating to the obtained 50% PM oxidation temperature are shown in FIG. 5.

### (Comparative Example 1)

The 50% PM oxidation temperature before the ash deposition treatment and after the ash deposition treatment in the exhaust gas purification device provided with the comparative oxidation catalyst was determined in the same manner as in Example 1, except that the DPF (comparative oxidation catalyst; the supported amount (coat amount) of calcium sulfate: 67.5 g/L) which supported calcium sulfate (anhydrate) and which was not subjected to the silver sulfate support treatment in the oxidation catalyst preparation was directly used as the oxidation catalyst. The results relating to the obtained 50% PM oxidation temperature are shown in FIG. 5.

### (Comparative Example 2)

### <Catalyst Preparation>

The DPF (comparative oxidation catalyst; the supported amount (coat amount) of calcium phosphate: 67.5 g/L) which supported calcium phosphate was obtained in the same manner as in the oxidation catalyst preparation step used in Reference Example 1, except that the silver sulfate support treatment was not performed in the oxidation catalyst preparation.

The 50% PM oxidation temperature before the ash deposition treatment and after the ash deposition treatment in the exhaust gas purification device provided with the comparative oxidation catalyst was determined in the same manner as in Example 1, except that the comparative oxidation catalyst (DPF supporting calcium phosphate) prepared in the above-described manner was used as the oxidation catalyst. The results relating to the obtained 50% PM oxidation temperature are shown in FIG. 5.

### (Comparative Example 3)

### <Catalyst Preparation>

First, a DPF same as the DPF used in the oxidation catalyst preparation of Example 1 was prepared. Then, ceria sol (trade name Needral U-15, produced by Taki Chemical Co., Ltd.) was impregnated therein to enter the partition wall pores of the DPF (impregnation step). The excess sol was then removed by using a suction device from the DPF impregnated with the sol, followed by calcining for 1 hr at 250°C in the air (calcination step). Such impregnation step and calcination step were repeatedly implemented till the supported amount of ceria per 1 L of the DPF volume became 67.5 g/L, and a DPF supporting ceria was obtained. Then, an aqueous solution of praseodymium nitrate was prepared by dissolving praseodymium (III) nitrate hydrate (produced by Wako Pure Chemical Industries, Ltd.). The aqueous solution of praseodymium nitrate was then impregnated to enter the partition wall pores of the DPF supporting ceria so as to obtain the supported amount of Pr₆O₁₁ per 1 L of the DPF volume of 7.5 g/L. A comparative oxidation catalyst was then obtained by calcining for 24 hr at 800°C. The supported amount of Pr₆O₁₁ per 1 L of the DPF volume was 7.5 g/L, but it can be assumed that a composite oxide (Ce_{0.9}Pr_{0.1}O₂) of ceria and praseodymium oxide was formed by calcination at 800°C.

The 50% PM oxidation temperature before the ash deposition treatment and after the ash deposition treatment in the exhaust gas purification device provided with the comparative oxidation catalyst was determined in the same manner as in Example 1, except that the comparative oxidation catalyst (DPF supporting composite oxide of ceria and praseodymium oxide) prepared in the above-described manner was used as the oxidation catalyst. The results relating to the obtained 50% PM oxidation temperature are shown in FIG. 5.

### (Comparative Example 4)

### <Catalyst Preparation>

First, a DPF same as the DPF used in the oxidation catalyst preparation of Example 1 was prepared. Then, ceria sol (trade name Needral U-15, produced by Taki Chemical Co., Ltd.) and zirconia sol (zirconyl acetate, produced by Daiichi Rare Elements Co.) were mixed at a mass ratio (ceria : zirconia) of ceria and zirconia, as solid fractions, of 30 : 70, and a liquid mixture was prepared. The liquid mixture was impregnated to enter the partition wall pores of the DPF (impregnation step). The excess liquid mixture was then removed by using a suction device from the DPF impregnated with the liquid mixture, followed by calcining for 1 hr at 250°C in the air (calcination step). Such impregnation step and calcination step were repeatedly implemented till the supported amount of the mixture of ceria and zirconia per 1 L of the DPF volume became 67.5 g/L. Subsequent calcination for 5 hr at 700°C produced a DPF supporting ceria and zirconia. The supported amount of the mixture of ceria and zirconia per 1 L of the DPF volume was 67.5 g/L, and the supported amount of ceria and zirconia per 1 L of the DPF volume were 20.3 g/L (ceria) and 47.3 g/L (zirconia), respectively.

Then, an aqueous solution of silver nitrate was prepared by dissolving silver nitrate (Toyo Chemical Industrial Co., Ltd.) in ion-exchange water. The aqueous solution of silver nitrate was then impregnated so as to enter the partition wall pores of the DPF supporting ceria and zirconia to obtain the supported amount of silver (metal) per 1 L of the DPF volume of 7.5 g/L. Then, calcination was performed for 5 hr at 500°C, silver was supported on ceria and zirconia supported (coated) on the partition walls of the DPF, and a comparative oxidation catalyst in the form supported on the DPF was produced. The supported amount of silver per 1 L of the DPF volume was 7.5 g/L.

The 50% PM oxidation temperature before the ash deposition treatment and after the ash deposition treatment in the exhaust gas purification device provided with the comparative oxidation catalyst was determined in the same manner as in Example 1, except that the comparative oxidation catalyst (DPF supporting a catalyst constituted by ceria and zirconia supporting silver) prepared in the above-described manner was used as the oxidation catalyst. The results relating to the obtained 50% PM oxidation temperature are shown in FIG. 5.

### (Comparative Example 5)

### <Catalyst Preparation>

First, a DPF same as the DPF used in the oxidation catalyst preparation of Example 1 was prepared. Then, alumina sol (trade name A520, produced by Nissan Chemical Industries, Ltd.) was impregnated to enter the partition wall pores of the DPF (impregnation step). The excess sol was then removed by using a suction device from the DPF impregnated with the sol, followed by calcining for 1 hr at 250°C in the air (calcination step). Such impregnation step and calcination step were repeatedly implemented till the supported amount of alumina per 1 L of the DPF volume became 30 g/L. A DPF supporting alumina was then obtained by calcining for 5 hr at 700°C. The supported amount of alumina mixture per 1 L of the DPF volume was 30 g/L.

Then, an aqueous solution of silver nitrate was prepared by dissolving silver nitrate (Toyo Chemical Industrial Co., Ltd.) in ion-exchange water. The aqueous solution of silver nitrate was then impregnated so as to enter the partition wall pores of the DPF supporting alumina to obtain the supported amount of silver (metal) per 1 L of the DPF volume of 7.5 g/L. Then, calcination was performed for 5 hr at 500°C, silver was supported on alumina supported (coated) on the partition walls of the DPF, and a comparative oxidation catalyst in the form supported on the DPF was produced. The supported amount of silver per 1 L of the DPF volume was 7.5 g/L.

The 50% PM oxidation temperature before the ash deposition treatment and after the ash deposition treatment in the exhaust gas purification device provided with the comparative oxidation catalyst was determined in the same manner as in Example 1, except that the comparative oxidation catalyst (DPF supporting a catalyst constituted by alumina supporting silver) prepared in the above-described manner was used as the oxidation catalyst. The results relating to the obtained 50% PM oxidation temperature are shown in FIG. 5.

### [Evaluation of Properties of Exhaust Gas Purification Devices Used in Examples 1 to 4, Reference Examples 1 to 3 and Comparative Examples 1 to 5]

### <X-Ray Diffraction (XRD) Measurements>

In Examples 1 to 4 and Comparative Example 1, powdered samples were taken from the catalyst support (coat) layers of the DPF for each oxidation catalyst at a stage before the ash deposition treatment, and X-ray diffraction (XRD) measurements were performed with respect to each sample. The XRD patterns obtained by the XRD measurements are shown in FIG. 6. In FIG. 6, the peaks at positions assigned with circular symbols (O) are the XRD peaks derived from Ag (metal), and the peaks at positions assigned with triangular symbols (Δ) are the XRD peaks derived from Ag₂SO₄.

The results shown in FIG. 6 clearly indicate that in the oxidation catalyst before the ash deposition treatment used in Example 1, only peaks of crystal phases of calcium sulfate and Ag₂SO₄ are observed in the XRD pattern, and the component supported on the support (calcium sulfate) is only Ag₂SO₄. By contrast, in the oxidation catalyst before the ash deposition treatment used in Example 2, the peaks of crystal phases of calcium sulfate, Ag₂SO₄ and Ag (metal) are observed in the XRD pattern, and the components supported on the support (calcium sulfate) are Ag₂SO₄ and Ag (metal). Further, in Examples 3 and 4, peaks of calcium sulfate and Ag (metal) are observed in the XRD pattern, and the component supported on the support (calcium sulfate) is only metallic silver. Such results confirmed that by supplying rich gas it is possible to precipitate metallic silver on the support. Further, in Comparative Example 1, only calcium sulfate was confirmed by the XRD pattern.

### <Results on 50% PM Oxidation Temperature>

The catalytic capacity of each exhaust gas purification device was evaluated on the basis of the 50% PM oxidation temperature before the ash deposition treatment and after the ash disposition treatment in each exhaust gas purification device shown in FIG. 5.

As clearly follows from the results shown in FIG. 5, where the PM oxidation activity of the exhaust gas purification devices obtained in Examples 1 to 4 and Reference Examples 1 to 3 before the oxidation catalysts were subjected to the ash deposition treatment is compared with that of the exhaust gas purification devices obtained in Comparative Examples 1 and 2, all of the exhaust gas purification devices obtained in Examples 1 to 4 and Reference Examples 1 to 3 have a 50% PM oxidation temperature lower than that of the exhaust gas purification devices obtained in Comparative Examples 1 and 2 and have PM oxidation capacity superior to that of the exhaust gas purification devices obtained in Comparative Examples 1 and 2. The inventors infer that such results are obtained because the PM oxidation activity is not demonstrated when only calcium sulfate or calcium phosphate is supported on the DPF, as in the exhaust gas purification devices obtained in Comparative Examples 1 and 2.

Where the PM oxidation activity of the exhaust gas purification devices obtained in Examples 1 to 4 and Reference Examples 1 to 3 is compared with that of the exhaust gas purification devices obtained in Comparative Examples 3 to 5, the PM oxidation activity of all of the devices before the ash deposition treatment is implemented can be said to be at a substantially the same level. Meanwhile, after the ash deposition treatment was implemented, the PM oxidation capacity of the exhaust gas purification devices obtained in Comparative Examples 3 to 5 decreased significantly, whereas all of the exhaust gas purification devices obtained in Examples 1 to 4 and Reference Examples 1 to 3 demonstrated the PM oxidation capacity at about the same level as before the ash deposition treatment was implemented, and it was confirmed that sufficiently high PM oxidation activity could be maintained even after the ash deposition. The exhaust gas purification device obtained in Comparative Example 4 demonstrated a comparatively high PM oxidation activity even after the ash deposition treatment was implemented, but the deposition of ash greatly changed the activity which was found to be a significant obstacle for practical use. Further, in Comparative Example 4, the ash deposition thickness was 50 µm, but where the ash deposition thickness further increases in actual use, the PM oxidation capacity further decreases. The results shown in FIG. 5 also confirmed that when the treatment of supplying the rich gas is implemented (Examples 2 to 4, Reference Examples 2 and 3), the exhaust gas purification devices demonstrate higher PM oxidation capacity.

The above-described results indicate that by contrast with the comparative exhaust gas purification devices (Comparative Examples 1 to 5), the exhaust gas purification devices in accordance with the present invention (Examples 1 to 4) can maintain sufficiently high PM oxidation activity even after the ash deposition treatment. As a consequence, in all of the exhaust gas purification devices in accordance with the present invention (Examples 1 to 4), the activity of the covered catalyst with respect to PM can be reliably regenerated with high accuracy.

### INDUSTRIAL APPLICABILITY

As described hereinabove, in accordance with the present invention, it is possible to provide an exhaust gas purification device in which the decrease in particulate matter oxidation capacity caused by the deposition of ash can be sufficiently inhibited and sufficiently high particulate matter oxidation capacity can be demonstrated even after the deposition of ash, and also to provide an exhaust gas purification method using the exhaust gas purification apparatus.

Therefore, the exhaust gas purification apparatus and the exhaust gas purification method in accordance with the present invention are especially useful as a device and method for purifying exhaust gas, for example, from a diesel engine.

### Description of the Reference Numerals

11: substrate; 12: silver-containing substance; 12': movable silver compound; 13: ash; 21: internal combustion engine; 22: exhaust gas pipe; 23: oxidation catalyst; 24: control means; 25; pressure sensor; 26: temperature sensor.

## Claims

1. An exhaust gas purification device comprising an oxidation catalyst (23) for oxidizing and purifying particulate matter contained in exhaust gas from an internal combustion engine (21), the exhaust gas including ash (13), wherein the oxidation catalyst (23) is provided with a support (11) constituted by Ca sulfate, and silver sulfate (12) supported on the support (11); and
the oxidation catalyst (23) is formed such that a catalyst provided with the support (11) and the silver sulfate (12) is supported as a layer on a particulate filter (DPF); wherein
the supported amount of silver sulfate per 1 L of the particulate filter volume is 10.8 g/L;
the supported amount of silver sulfate expressed in terms of metallic silver per 100 parts by mass of the Ca sulfate is 11.11 parts by mass; and
the thickness of the oxidation catalyst layer is 2 µm.

2. The exhaust gas purification device according to claim 1, further comprising first control means (24) for performing control such that a step of bringing exhaust gas, in which an air-fuel ratio is lean, into contact with the oxidation catalyst (23) and a step of bringing exhaust gas, in which the air-fuel ratio is rich, into contact with the oxidation catalyst (23) are implemented alternately.

3. The exhaust gas purification device according to claim 1 or 2, further comprising ash deposition amount estimation means (24) for estimating an amount of ash (13) contained in the exhaust gas that has been deposited on the oxidation catalyst (23).

4. The exhaust gas purification device according to claim 3, further comprising second control means (24) for performing control such that a step of bringing exhaust gas, in which the air-fuel ratio is rich, into contact with the oxidation catalyst (23) is implemented when the deposition amount of ash (13) estimated by the ash deposition amount estimation means (24) exceeds a reference value.

5. An exhaust gas purification method that uses an exhaust gas purification device including an oxidation catalyst (23) for oxidizing and purifying particulate matter contained in exhaust gas from an internal combustion engine (21) to bring the exhaust gas into contact with the oxidation catalyst (23), thereby purifying the particulate matter, the exhaust gas including ash (13), wherein the oxidation catalyst (23) is provided with a support (11) constituted by Ca sulfate, and silver sulfate (12) supported on the support (11); and
the oxidation catalyst (23) is formed such that a catalyst provided with the support (11) and the silver-containing substance (12) is supported as a layer on a particulate filter (DPF); wherein the supported amount of silver sulfate per 1 L of the particulate filter volume is 10.8 g/L;
the supported amount of silver sulfate expressed in terms of metallic silver per 100 parts by mass of the Ca sulfate is 11.11 parts by mass; and
the thickness of the oxidation catalyst layer is 2 µm.

6. The exhaust gas purification method according to claim 5, wherein a step of bringing exhaust gas, in which an air-fuel ratio is lean, into contact with the oxidation catalyst (23) and a step of bringing exhaust gas, in which the air-fuel ratio is rich, into contact with the oxidation catalyst (23) are implemented alternately.

7. The exhaust gas purification method according to claim 5 or 6, further comprising:
estimating an amount of ash contained in the exhaust gas that has been deposited on the oxidation catalyst, wherein
a step of bringing exhaust gas, in which the air-fuel ratio is rich, into contact with the oxidation catalyst (23) is implemented when the estimated deposition amount of ash (13) exceeds a reference value.

## Patentansprüche

1. Abgasreinigungsvorrichtung, die einen Oxidationskatalysator (23) zum Oxidieren und Reinigen von Feinstaub, der im Abgas enthalten ist, aus einem Verbrennungsmotor (21) umfasst, wobei das Abgas Asche (13) enthält, wobei
der Oxidationskatalysator (23) mit einem Träger (11) versehen ist, der durch Ca-Sulfat und Silbersulfat (12), das vom Träger (11) getragen wird, konstituiert ist; und
der Oxidationskatalysator (23) derart gebildet ist, dass ein Katalysator, der mit dem Träger (11) und dem Silbersulfat (12) versehen ist, als eine Schicht auf einem Partikelfilter (DPF) getragen wird; wobei
die unterstützte Menge von Silbersulfat pro 11 des Partikelfiltervolumens 10,8 g/l ist;
die unterstützte Menge von Silbersulfat, ausgedrückt als metallisches Silber pro 100 Massenanteile des CA-Sulfats, 11,11 Massenanteile ist und
die Dicke der Oxidationskatalysatorschicht 2 µm beträgt.

2. Abgasreinigungsvorrichtung nach Anspruch 1, die ferner ein erstes Steuermittel (24) zum Durchführen einer Steuerung umfasst, derart, dass ein Schritt des Inkontaktbringens von Abgas, bei dem ein Luftkraftstoffverhältnis mager ist, mit dem Oxidationskatalysator (23) und ein Schritt des Inkontaktbringens von Abgas, bei dem das Luftkraftstoffverhältnis fett ist, mit dem Oxidationskatalysator (23) abwechselnd implementiert werden.

3. Abgasreinigungsvorrichtung nach Anspruch 1 oder 2, die ferner ein Ascheablagerungsmengenschätzmittel (24) zum Schätzen einer Menge von Asche (13), die im Abgas enthalten und auf dem Oxidationskatalysator (23) abgelagert ist, umfasst.

4. Abgasreinigungsvorrichtung nach Anspruch 3, die ferner ein zweites Steuermittel (24) zum Durchführen einer Steuerung umfasst, derart, dass ein Schritt des Inkontaktbringens von Abgas, bei dem das Luftkraftstoffverhältnis fett ist, mit dem Oxidationskatalysator (23) implementiert wird, wenn die Ablagerungsmenge von Asche (13), die vom Ascheablagerungsmengenschätzmittel (24) geschätzt wurde, einen Referenzwert überschreitet.

5. Abgasreinigungsverfahren, das eine Abgasreinigungsvorrichtung verwendet, die einen Oxidationskatalysator (23) zum Oxidieren und Reinigen von Feinstaub, der im Abgas enthalten ist, aus einem Verbrennungsmotor (21) umfasst, um das Abgas mit dem Oxidationskatalysator (23) in Kontakt zu bringen, um dadurch den Feinstaub zu reinigen, wobei das Abgas Asche (13) beinhaltet, wobei
der Oxidationskatalysator (23) mit einem Träger (11) versehen ist, der durch Ca-Sulfat und Silbersulfat (12), das vom Träger (11) getragen wird, konstituiert ist; und
der Oxidationskatalysator (23) derart gebildet ist, dass ein Katalysator, der mit dem Träger (11) und der Silber enthaltenden Substanz (12) versehen ist, als eine Schicht auf einem Partikelfilter DPF getragen wird; wobei
die unterstützte Menge von Silbersulfat pro 11 des Partikelfiltervolumens 10,8 g/l ist;
die unterstützte Menge von Silbersulfat, ausgedrückt als metallisches Silber pro 100 Massenanteile des CA-Sulfats, 11,11 Massenanteile ist und
die Dicke der Oxidationskatalysatorschicht 2 µm beträgt.

6. Abgasreinigungsverfahren nach Anspruch 5, wobei ein Schritt des Inkontaktbringens von Abgas, bei dem ein Luftkraftstoffverhältnis mager ist, mit dem Oxidationskatalysator (23) und ein Schritt des Inkontaktbringens von Abgas, bei dem das Luftkraftstoffverhältnis fett ist, mit dem Oxidationskatalysator (23) abwechselnd implementiert werden.

7. Abgasreinigungsverfahren nach Anspruch 5 oder 6, das ferner Folgendes umfasst:
Schätzen einer Menge von Asche, die im Abgas enthalten und auf dem Oxidationskatalysator abgelagert ist, wobei
ein Schritt des Inkontaktbringens von Abgas, bei dem das Luftkraftstoffverhältnis fett ist, mit dem Oxidationskatalysator (23) implementiert wird, wenn die geschätzte Ablagerungsmenge von Asche (13) einen Referenzwert überschreitet.

## Revendications

1. Dispositif d'épuration de gaz d'échappement, comprenant un catalyseur à oxydation (23) pour réaliser l'oxydation et l'épuration contre des matières particulaires contenues dans un gaz d'échappement provenant d'un moteur à combustion interne (21), le gaz d'échappement incluant des cendres (13), dans lequel
le catalyseur à oxydation (23) est pourvu d'un support (11) constitué par du sulfate de Ca, et de sulfate d'argent (12) supporté sur le support (11) ; et
le catalyseur à oxydation (23) est formé de telle sorte qu'un catalyseur pourvu du support (11) et du sulfate d'argent (12) soit supporté sous forme de couche sur un filtre à matières particulaires (DPF) ; dans lequel
la quantité supportée de sulfate d'argent par 1 L du volume de filtre à matières particulaires est 10,8 g/L ;
la quantité supportée de sulfate d'argent exprimée en termes d'argent métallique par 100 parties en masse du sulfate de Ca est 11,11 parties en masse ; et
l'épaisseur de la couche de catalyseur à oxydation est 2 µm.

2. Dispositif d'épuration de gaz d'échappement selon la revendication 1, comprenant en outre des premiers moyens de commande (24) pour effectuer une commande de telle sorte qu'une étape de la mise d'un gaz d'échappement, dans lequel un rapport air-carburant est pauvre, en contact avec le catalyseur à oxydation (23) et une étape de la mise d'un gaz d'échappement, dans lequel le rapport air-carburant est riche, en contact avec le catalyseur à oxydation (23) sont mises en oeuvre de façon alternée.

3. Dispositif d'épuration de gaz d'échappement selon la revendication 1 ou 2, comprenant en outre des moyens d'estimation de quantité de dépôt de cendres (24) pour estimer une quantité de cendres (13) contenues dans le gaz d'échappement qui ont été déposées sur le catalyseur à oxydation (23).

4. Dispositif d'épuration de gaz d'échappement selon la revendication 3, comprenant en outre des seconds moyens de commande (24) pour effectuer une commande de telle sorte qu'une étape de la mise d'un gaz d'échappement, dans lequel le rapport air-carburant est riche, en contact avec le catalyseur à oxydation (23) soit mise en oeuvre lorsque la quantité de dépôt de cendres (13) estimée par les moyens d'estimation de quantité de dépôt de cendres (24) dépasse une valeur de référence.

5. Procédé d'épuration de gaz d'échappement qui utilise un dispositif d'épuration de gaz d'échappement incluant un catalyseur à oxydation (23) pour réaliser l'oxydation et l'épuration contre des matières particulaires contenues dans un gaz d'échappement provenant d'un moteur à combustion interne (21) pour mettre le gaz d'échappement en contact avec le catalyseur à oxydation (23), ainsi réalisant l'épuration contre les matières particulaires, le gaz d'échappement incluant des cendres (13), dans lequel
le catalyseur à oxydation (23) est pourvu d'un support (11) constitué par du sulfate de Ca, et de sulfate d'argent (12) supporté sur le support (11) ; et
le catalyseur à oxydation (23) est formé de telle sorte qu'un catalyseur pourvu du support (11) et de la substance contenant de l'argent (12) soit supporté sous forme de couche sur un filtre à matières particulaires DPF ; dans lequel
la quantité supportée de sulfate d'argent par 1 L du volume de filtre à matières particulaires est 10,8 g/L ;
la quantité supportée de sulfate d'argent exprimée en termes d'argent métallique par 100 parties en masse du sulfate de Ca est 11,11 parties en masse ; et
l'épaisseur de la couche de catalyseur à oxydation est 2 µm.

6. Procédé d'épuration de gaz d'échappement selon la revendication 5, dans lequel une étape de la mise d'un gaz d'échappement, dans lequel un rapport air-carburant est pauvre, en contact avec le catalyseur à oxydation (23) et une étape de la mise d'un gaz d'échappement, dans lequel le rapport air-carburant est riche, en contact avec le catalyseur à oxydation (23) sont mises en oeuvre de façon alternée.

7. Procédé d'épuration de gaz d'échappement selon la revendication 5 ou 6, comprenant en outre :
l'estimation d'une quantité de cendres contenues dans le gaz d'échappement qui ont été déposées sur le catalyseur à oxydation, dans lequel
une étape de la mise d'un gaz d'échappement, dans lequel le rapport air-carburant est riche, en contact avec le catalyseur à oxydation (23) est mise en oeuvre lorsque la quantité de dépôt estimée de cendres (13) dépasse une valeur de référence.
